Europäisches Patentamt

European Patent Office

Office européen des brevets

(19)

(11) Veröffentlichungsnummer: **0 045 353**
**A1**

(12) **EUROPÄISCHE PATENTANMELDUNG**

(21) Anmeldenummer: **81103756.3**

(22) Anmeldetag: **15.05.81**

(51) Int. Cl.³: **F 03 B 17/06**
**F 03 B 7/00**

(30) Priorität: **31.07.80 ES 493868**

(43) Veröffentlichungstag der Anmeldung:
**10.02.82 Patentblatt 82/6**

(84) Benannte Vertragsstaaten:
**BE DE FR GB IT NL SE**

(71) Anmelder: **Parra, José Martinez**
**Calle Salitre 33-1**
**Edificio Juan XXIII Cartagena (Murcia)(ES)**

(72) Erfinder: **Parra, José Martinez**
**Calle Salitre 33-1**
**Edificio Juan XXIII Cartagena (Murcia)(ES)**

(74) Vertreter: **Vossius.Vossius.Tauchner.Heunemann.Rauh**
**Siebertstrasse 4 P.O. Box 86 07 67**
**D-8000 München 86(DE)**

(54) **Vorrichtung zur Erzeugung von elektrischer Energie durch Ausnutzung der Bewegungsenergie des Meereswassers.**

(57) Gegenstand der Erfindung ist ein Schwimmkörper, der zwei schwimmende Träger (1) aufweist, die durch eine untere Plattform (2), ein Hauptdeck (3) und ein dazwischen angeordnetes großes Flügelrad (5) mit horizontaler Achse (12) verbunden sind. Die Achse des Flügelrades wird von vertikalen plattenförmigen Stützen (4) gehalten, die die Flügel des Flügelrades in mehrere Sektoren unterteilen. Die Drehbewegung des Flügelrades wird auf eine auf dem Hauptdeck (3) angeordnete Maschineneinrichtung (19-22) zur Erzeugung von elektrischer Energie übertragen. Die Vorrichtung der Erfindung zeichnet sich trotz ihrer großen Dimensionen durch hohe Stabilität aus.

Fig.7

EP 0 045 353 A1

0045353

VOSSIUS · VOSSIUS · TAUCHNER · HEUNEMANN · RAUH
PATENTANWÄLTE

u.Z.: R 101 EP (Ra/kä)
Caso: 493.868
JOSE MARTINEZ PARRA          15. Mai 1981
Cartagena, Murcia, Spanien

"Vorrichtung zur Erzeugung von elektrischer Energie durch
Ausnutzung der Bewegungsenergie des Meereswassers"

Gegenstand der Erfindung ist eine Vorrichtung zur Erzeugung von elektrischer Energie durch Ausnutzung der Bewegungsenergie des Meereswassers. Die Gewinnung von elektrischer Energie aus der Drehbewegung eines Rotors oder Flügelrades durch Umwandlung mittels eines Generators ist an sich bekannt. Beispielsweise wird die potentielle Energie des Meerwassers in Gezeitenkraftwerken zur Erzeugung von elektrischer Energie ausgenützt. Andererseits ist aber die Gewinnung von elektrischer Energie aus den Strömungen und Bewegungen des Meereswassers bisher in praktischem Maße noch nicht möglich, da die bei den erforderlichen großen Anlagen auftretenden Stabilitätsprobleme noch nicht gelöst wurden.

Der Erfindung liegt die Aufgabe zugrunde, eine Vorrichtung zur Erzeugung von elektrischer Energie durch Ausnutzung der Bewegungsenergie des Meereswassers bereitzustellen, mit der eine befriedigende Ausnutzung der Bewegungsenergie des Meereswassers erreicht und deshalb ein wirtschaftlicher Betrieb ermöglicht wird, und die ferner die erforderliche Stabilität aufweist.

Gegenstand der Erfindung ist demnach eine Vorrichtung zur Erzeugung von elektrischer Energie durch Ausnutzung der Bewegungsenergie des Meereswassers, die gekennzeichnet ist durch einen Schwimmkörper, der zwei längliche, bootförmige schwimmende Träger aufweist, die durch eine untere Plattform, ein Hauptdeck und ein zwischen diesen angeordnetes Flügelrad mit horizontaler Achse verbunden sind, welche die Bewegung des Flügelrades auf eine Einrichtung zur Umwandlung der Bewegungsenergie in elektrische Energie überträgt.

Die Vorrichtung der Erfindung ermöglicht die Erzeugung von elektrischer Energie durch Ausnutzung der Bewegungsenergie des Meereswassers auch an Orten, die sich nicht durch besonders starke Meeresströmungen auszeichnen. Dies wird durch die Konstruktion der Vorrichtung der Erfindung erreicht, bei der eine Regulierung und Konzentrierung des strömenden Meereswassers in Richtung auf das Flügelrad stattfindet. Das Meereswasser gelangt in der Vorrichtung der Erfindung also mit einer im Vergleich zur Umgebung erheblich erhöhten Geschwindigkeit auf das Flügelrad. Durch das vor dem Flügelrad vorgesehene Tor kann der Zutritt des Wassers zum Flügelrad je nach Bedarf gesteuert werden. Ein besonders wesentliches Merkmal der Erfindung besteht schließlich darin, daß das großdimensionierte Flügelrad, das beispielsweise eine Breite von etwa 100 m und einen Durchmesser von etwa 20 m aufweist, in besonders stabiler Weise ausgeführt ist. Im Bereich des Flügelrades sind zwischen der unteren Plattform und dem Hauptdeck plattenförmige Stützen vorgesehen, durch die die Flügel des Flügelrades in mehrere Sektoren unterteilt werden. Die Platten ergeben eine erhebliche Versteifung und Verspannung des gesamten Aufbaus, insbesondere im Bereich des bewegten Flügelrades.

In der beipielgenden Zeichnung ist eine Ausführungsform der Vorrichtung der Erfindung schematisch dargestellt. Es zeigen:

Figur 1   die Hauptansicht von der Bugseite,
Figur 2   die Hauptansicht von der Heckseite,
Figur 3   eine Seitenansicht,
Figur 4   einen horizontalen Querschnitt in Höhe des Flügelrades,
Figur 5   einen horizontalen Querschnitt in Höhe der Maschinenplattform auf dem Hauptdeck,
Figur 6   eine Aufsicht auf die Abdeckungen,
Figur 7   einen vertikalen Querschnitt in Höhe des Flügelrades, und

Figur 8   einen Längsschnitt durch die Vorrichtung der Erfindung.


Die Vorrichtung der Erfindung wird zweckmäßigerweise an
geeigneten Orten in der Nähe der Küsten angebracht und in
die Richtung orientiert, in der die Strömungen des Wassers
am stärksten sind. Besonders geeignete Plätze können in der
Nähe von Landzungen oder Meerengen sein. Erforderlich sind
Stellen mit einer Wassertiefe, die für den Tiefgang und
die Sicherheit der schwimmenden Träger der Vorrichtung ausreicht.


Die Vorrichtung der Erfindung ist ein Schwimmkörper, der
vorzugsweise aus Metall besteht. Er weist eine feste
Struktur auf, die den Sicherheitsanforderungen genügt. Die
Oberfläche der Vorrichtung ist viereckig mit einer parabolisch-hyperbolischen Abdeckung, um dem Wind den geringstmöglichen Widerstand zu bieten. Diese Abdeckung ist an ihrer
Bekrönung mit einem großen Leitwerk versehen, um die schwimmende Basis in die Richtung zu orientieren, in der der
Wind am stärksten und im allgemeinen ebenfalls die Meeresströmungen am stärksten sind. Die Gesamtheit der Einrichtungen befindet sich auf zwei verschiedenen Ebenen, welche, obwohl jede von ihnen eine unterschiedliche Aufgabe erfüllt,
die Gesamtheit des Aufbaus der Vorrichtung der Erfindung
bilden. Die Hauptebene (Hauptdeck) ist in ihrem ganzen
äußeren Umfang von einer weiten Verkleidung umgeben, die
einen Teil des Aufbaus bildet. Dabei weisen Bug und Heck
eine größere Oberfläche auf. Letzteres wird als Kai zum Anlegen von Schiffen für verschiedene Zwecke oder für den
Transport der Maschineneinrichtung des Aufbaues benutzt.
Der Schwimmkörper ist an Betonblöcken verankert, die sich
in entsprechender Entfernung um ihn herum befinden.

Es ist vorgesehen, daß die gesamte Oberseite der unteren
Plattform und die Unterseite des Hauptdecks im Bereich zwischen den zwei schwimmenden Stützen vom Bug bis zum Heck gekrümmte und geneigte Form im Hinblick auf die imaginäre
horizontale Ebene des Meeres aufweisen, damit in Zusammenwirkung mit den Bugteilen und den inneren Wänden der schwimmenden Träger die gesamte Energie des Wassers in Richtung
auf das horizontale Flügelrad geleitet und konzentriert
wird.

Die Vorrichtung der Erfindung stellt einen Schwimmkörper
dar, der zwei schwimmende Träger aufweist. Diese Träger haben die Form von langgestreckten Booeten. Sie bestehen
vorzugsweise aus einem metallischen Werkstoff.

Die beiden schwimmenden Träger sind unter der Wasserlinie
durch eine untere Plattform miteinander verbunden, die ebenfalls aus Metall besteht. Während die Unterseite der unteren
Plattform gerade ist und den Kiel des Schwimmkörpers darstellt, weist die Oberseite zwischen den schwimmenden Trägern vom Bug zum Heck des Schwimmkörpers ein charakteristisch geformtes Profil auf. Von der Bugseite her steigt
die Oberseite der unteren Plattform in Richtung auf das
Flügelrad hin zunächst an. Vor dem Ort des Flügelrades
sinkt sie wieder ab und bildet, indem sie hinter dem Flügelrad wieder ansteigt, eine Art Wanne an der
Stelle, wo sich das Flügelrad befindet. Auf der Heckseite
des Schwimmkörpers steigt die Oberseite der unteren Plattform, wie erwähnt, zunächst wieder an, um dann zum Heck hin
erneut abzufallen. Die Oberseite der unteren Plattform weist
also ein Profil auf, das zwei Wölbungen nach oben zeigt,
eine zwischen Bugteil und Flügelrad, die anderen zwischen
Flügelrad und Heckteil. Zwischen den beiden Wölbungen befindet sich eine wannenartige Vertiefung am Ort des Flügelrades.

BAD ORIGINAL

Über der Wasserlinie sind die beiden schwimmenden Träger
durch das Hauptdeck des Schwimmkörpers miteinander verbunden. Die Unterseite dieses Hauptdecks fällt sowohl von der
Bug- als auch von der Heckseite her in Richtung auf den
Ort des Flügelrades ab. Am Ort des Flügelrades bildet die
Unterseite des Hauptdecks eine nach oben gerichtete Wölbung.
Zwischen dieser und der wannenartigen Vertiefung in der
Oberseite der unteren Plattform ist das Flügelrad angeordnet.

Auch das Hauptdeck ist in Metall, vorzugsweise Stahl ausgeführt. Ebenso wie die untere Plattform ist auch das Hauptdeck ein Hohlkörper und trägt damit zur Schwimmfähigkeit der
Vorrichtung bei.

Das Flügelrad (Schaufelrad oder Turbine) ist mit horizontaler Achse zwischen den beiden schwimmenden Trägern sowie
an der erwähnten Stelle zwischen der Oberseite der unteren
Plattform und der Unterseite des Hauptdecks angeordnet.
In Längsrichtung des Schwimmkörpers gesehen befindet es
sich etwa in seiner Mitte.

Die horizontal angeordnete Achse des Flügelrades ist vorzugsweise hohl, um das Gewicht der Vorrichtung zu vermindern. Sie besteht vorzugsweise aus Spezialstahl.

An den Stellen, wo die Achse des Flügelrades die inneren
Seitenwände der schwimmenden Träger durchstößt, sind diese
besonders verstärkt. Die Verstärkungen enthalten die Lager
für die Drehbewegung der Achse.

Nachdem das Flügelrad zwischen den beiden schwimmenden
Trägern in der Vorrichtung der Erfindung eine beträchtliche
Breite besitzt, sind weitere Verstärkungen in diesem Bereich vorgesehen, um die nötige Stabilität zu erzielen.
Über die gesamte Breite des Flügelrades sind parallel zur Längsrichtung des Schwimmkörpers, d.h. senkrecht zur Achse
des Flügelrades, zwischen der unteren Plattform und dem
Hauptdeck Platten, vorzugsweise aus Spezialstahl vorgesehen, die von der Achse des Flügelrades durchstoßen werden.
Die Flügel des Flügelrades werden dagegen von diesen Platten
in mehrere Sektionen unterteilt. Die Achse des Flügelrades
dreht sich also auf Lagern, die einerseits in den Verstärkungen der inneren Seitenwände der schwimmenden Träger und
andererseits an den Durchstoßpunkten durch die genannten
Verstärkungsplatten angeordnet sind. Das Flügelrad hat demnach keine über die gesamte Breite durchgehenden Flügel
oder Schaufeln, sondern besteht aus einer Mehrzahl von
Schaufeln in jedem der durch die Verstärkungsplatten unterteilten Sektoren.

In einer besonders bevorzugten Ausführungsform sind die
Flügel des Flügelrades in jedem der Sektoren im Bezug auf
die Nachbarsektoren versetzt an der Achse befestigt.

Die Anzahl der Verstärkungsplatten ist zwar nicht besonders
kritisch. Bevorzugt ist jedoch ihre Anordnung in einem Abstand von etwa 10 m, so daß bei einer Breite des Flügelrades von beispielsweise 100 m neun derartige Verstärkungsplatten vorgesehen sind.

Die Flügel des Flügelrades weisen eine Krümmung auf, wobei
ihre konkave Seite zur Bugseite des Schwimmkörpers weist,
wenn sich der Flügel unterhalb der Achse befindet. Auch die
Zahl der Flügel des Flügelrades ist nicht besonders festgelegt. Bevorzugt ist eine Ausführung mit mehr als 10, beispielsweise mit 12 Flügeln.

Durch die Ausführung des Flügelrades zwischen den beiden
schwimmenden Trägern mit den über seine gesamte Breite angeordneten Verstärkungsplatten wird eine hervorragende Versteifung des gesamten Aufbaus erreicht, so daß die Vorrichtung der Erfindung auch schwerem Seegang standhalten kann.

Das von der Bugseite her in den Schwimmkörper eindringende Wasser findet einen Weg vor, dessen Querschnitt sich in Richtung auf das Flügelrad hin verengt. Dafür sind zum einen die von der Bugseite her nach innen verlaufenden inneren Seitenwände der schwimmenden Träger und zum anderen die ansteigende Oberseite der unteren Plattform sowie die abfallende Unterseite des Hauptdecks verantwortlich. Im Verhältnis zur Öffnung des Schwimmkörpers an der Bugseite ist der Querschnitt, durch den das Wasser strömen kann, vor dem Flügelrad beträchtlich enger. Etwa an der engsten Stelle vor dem Flügelrad ist zwischen den Seitenwänden der schwimmenden Träger, der Oberseite der unteren Plattform und der Unterseite des Hauptdecks ein Tor vorgesehen, mit dem der Zutritt des Wassers zum Flügelrad reguliert oder versperrt werden kann. Das Tor ist vorzugsweise so ausgeführt, daß es eine große Stahlplatte darstellt, die beim Öffnen nach oben in einem Schlitz verschwindet, der sich in dem hohlen Hauptdeck befindet. Das Öffnen und Schließen des Tores kann durch mechanische oder hydraulische Mittel bewirkt werden. Durch die Einstellung der Höhe des Durchgangs mit Hilfe des Tores kann die Wassermenge, die auf das Flügelrad gelangt, in einfacher Weise gesteuert werden.

Die Bewegungsenergie des Flügelrades, die ihm von dem strömenden Wasser verliehen wird, wird durch seine horizontale Achse über zwei Umsetzgetriebe, die an den beiden seitlichen Enden der Achse des Flügelrades in den schwimmenden Trägern angeordnet sind, auf zwei vertikale Achsen übertragen. Diese nach oben in Richtung auf das Hauptdeck verlaufenden vertikalen Achsen übertragen die Bewegungsenergie des Flügelrades auf den Maschinenpark zur Umwandlung der Bewegungsenergie in elektrische Energie. Diese Maschineneinrichtung befindet sich innerhalb eines kuppelförmigen Aufbaus auf dem

Hauptdeck des Schwimmkörpers. Sie besteht aus zwei Einheiten,
die von den beiden vertikalen Achsen in den zwei schwimmenden
Trägern versorgt werden. Jede der Einheiten besteht aus einem
Hauptgetriebe und einer Einrichtung zur automatischen Steuerung der Drehzahl des Flügelrades und/oder der nachgeschalteten Generatoren zur Erzeugung der elektrischen Energie, um
optimale Betriebsbedingungen im Hinblick auf die gegebene
Stärke der Bewegung des Meereswassers zu erzielen. Falls diese Generatoren Gleichstromgeneratoren sind, können ihnen elektro-mechanisch oder elektronisch arbeitende Wechselstromerzeuger, wie Gleichstrom-Wechselstrom-Wandler (Gleichstrommotor mit nachgeschalteten Wechselstromgenerator) oder Wechselrichter, nachgeschaltet werden.

Auf dem Hauptdeck befindet sich vor und hinter dem kuppelförmigen Aufbau im Bereich des Bugs und des Hecks jeweils
ein freier Platz, der sowohl zum Landen von Hubschraubern
als auch als Anlegestelle für Schiffe aller Art, beispielsweise zum Transport von Versorgungsgütern, dienen kann.

Auf dem Hauptdeck ist ferner ein großes Leitwerk vorgesehen, mit dessen Hilfe die Vorrichtung der Erfindung in Windrichtung gedreht wird. Da die Windrichtung meist auch die
bevorzugte Richtung der Strömung des Meereswassers ist,
kann die Vorrichtung der Erfindung auf diese Weise leicht
in der gewünschten Orientierung gehalten werden.

Die Vorrichtung der Erfindung ist in ihrem gesamten Aufbau
derart gestaltet, daß sie dem Wind und den Wellen des
Meeres einen möglichst geringen Widerstand bietet.

Eine wesentliche Charakteristik der erfindungsgemäßen Vorrichtung besteht demnach in der Bauart der bugseitigen
Öffnung des Schwimmkörpers, durch die das Meereswasser in
Richtung auf das Flügelrad strömt, sowie in der Ausführung
des Flügelrades selbst. Infolge der durch die vorstehend
erläuterte Konstruktion erzielten Festigkeit und Stabili- tät ist die Ausführung der Vorrichtung in sehr großer Dimension ermöglicht. Dadurch kann eine große Menge an Bewegungsenergie des Meereswassers nutzbar gemacht und ihre Umwandlung in eine ebenfalls erhebliche Menge an elektrischer Energie in wirtschaftlicher Weise ermöglicht werden.

Die Vorrichtung der Erfindung wird nun anhand der in der Zeichnung dargestellten Ausführungsform näher erläutert.

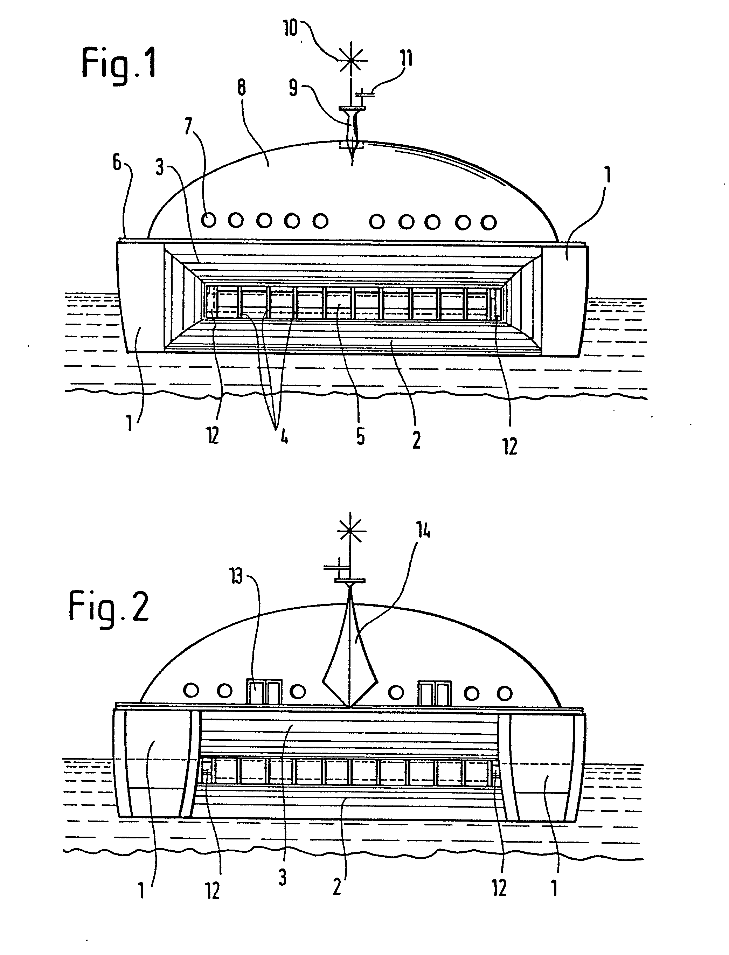

Figur 1 zeigt schematisch eine Ansicht der Vorrichtung der Erfindung von der Bugseite aus. In der Figur 1 bezeichnet 1 die schwimmenden Träger der Vorrichtung, mit denen die untere Plattform 2, das Hauptdeck 3 sowie das Flügelrad 5 fest verbunden sind. In Figur 1 sind die in Richtung auf das Flügelrad 5 nach innen verlaufenden inneren Seitenwände der schwimmenden Träger 1, sowie die in gleicher Richtung ansteigende Oberseite der unteren Plattform 2 und die abfallende Unterseite des Hauptdecks 3 zu erkennen. Wesentliche Aufgaben der schwimmenden Träger 1 sind die Herstellung der Schwimmfähigkeit der Vorrichtung sowie ihr Beitrag zu deren Gleichgewicht. Die Oberfläche der unteren Plattform 2 dient der Regulierung und Konzentrierung des Meereswassers, das durch die vordere Öffnung in die Vorrichtung eintritt. Diese Oberseite ist derart geformt, daß das Wasser mit großer Geschwindigkeit auf die Flügel oder Schaufeln des Flügelrades 5 auftrifft. Die Oberseite der unteren Plattform 2 erstreckt sich über die ganze Länge der Vorrichtung von der bugseitigen Öffnung bis zum Ausgang des Wassers an der Heckseite. Die Unterseite des Hauptdecks 3 dient ebenfalls der Regulierung und Konzentration des Wassers in Richtung auf das Flügelrad 5, sowie gleichzeitig als Wellenbrecher, falls das Wasser bis zu dieser Höhe gelangt. Zusammen mit der Oberseite der unteren Plattform 2 bewirkt die Unterseite des Hauptdecks 3 die Konzentration des Wassers in Richtung auf das Flügelrad 5 und erhöht infolge dieser Konzentration seine Geschwindigkeit.

EPA-u.PCT-SATZSPIEGEL-PAPIER
...

Mit 4 werden die plattenförmigen Stützen im Bereich des Flügelrades 5 bezeichnet. Diese Stützen stellen einen Teil des Gesamtaufbaus in vertikaler Richtung dar und leisten einen wesentlichen Beitrag zur Stabilität der Vorrichtung. Sie verbinden und verstreben die untere Plattform 2 mit dem Hauptdeck 3. Außerdem unterteilen sie die Flügel des Flügelrades 5 in mehrere Sektoren. In jedem Sektor sind die Flügel des Flügelrades 5 an dessen zentraler, horizontaler Achse 12 befestigt. Diese Befestigung ist derart ausgeführt, daß die Flügel in jedem der Sektoren in einer im Vergleich zu den Nachbarsektoren unterschiedlichen Position an der Achse 12 befestigt sind. Mit dieser Anordnung wird erreicht, daß Stellungen des Flügelrades 5 im Verlauf seiner Drehbewegung vermieden werden, in denen ein ungünstiger Winkel der Einwirkung des strömenden Wassers auf das Flügelrad 5 vorliegen würde.

In Figur 1 bedeutet 6 die umlaufende Reeling zum Schutz der Oberseite des Hauptdecks 3. Mit 7 sind die Licht- und Ventilationsöffnungen zum Inneren des kuppelförmigen Aufbaus 8 bezeichnet, in dem sich die Maschineneinrichtung befindet. 9 bezeichnet einen Mast, der Instrumente für metereologische und nautische Messungen und zur Nachrichtenübermittlung 10 und 11 trägt.

Figur 2 zeigt eine schematische Darstellung der Ansicht der Vorrichtung der Erfindung von der Heckseite. Auch in dieser Figur sind die schwimmenden Träger 1, die Oberseite der unteren Plattform 2 mit ihrem von dem Flügelrad 5 nach hinten abfallenden Profil sowie die Unterseite des Hauptdecks 3 mit dem in gleicher Richtung ansteigenden Profil zu erkennen.

In Figur 2 bezeichnet 13 die Eingänge in den kuppelförmigen Aufbau 8, in dem sich die Maschineneinrichtung befindet. Mit 14 wird das Leitwerk bezeichnet, dessen Aufgabe darin besteht, die Vorrichtung der Erfindung in Richtung des herrschenden Windes zu drehen.

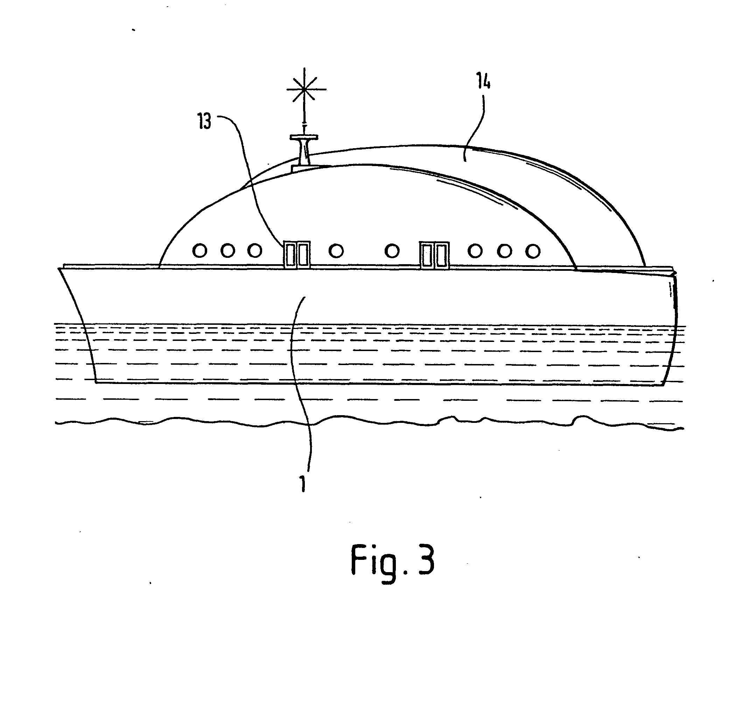

Figur 3 zeigt in schematischer Darstellung eine Seitenansicht der Vorrichtung der Erfindung. Auf dieser Figur ist insbesondere die Ausgestaltung des Leitwerkes 14 zu erkennen.

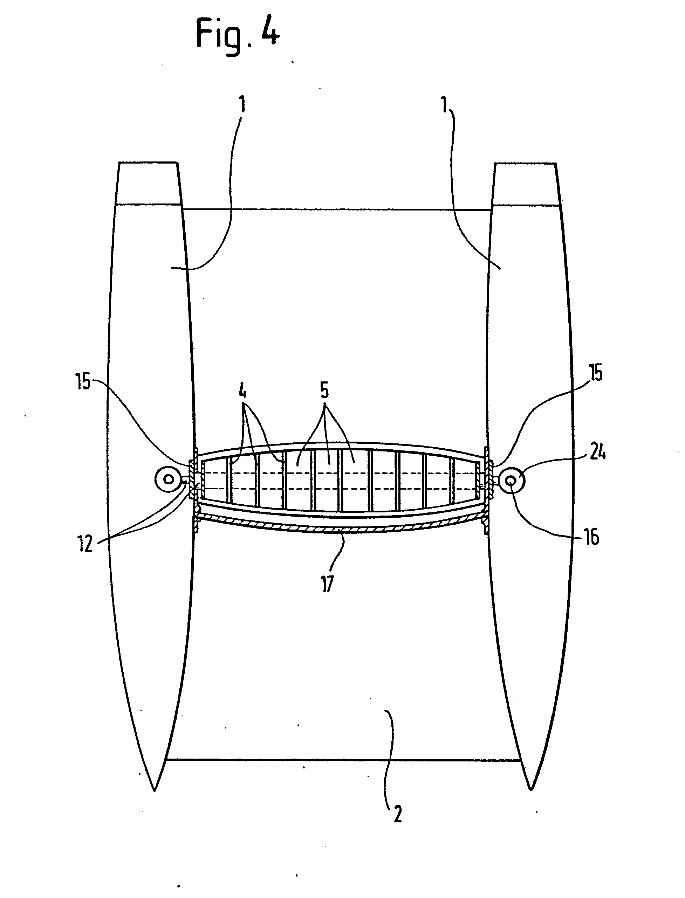

Figur 4 stellt einen horizontalen Querschnitt durch die Vorrichtung der Erfindung in Höhe des Flügelrades 5 dar. Neben den schwimmenden Trägern 1 und der Oberseite der unteren Plattform 2 ist in Figur 4 insbesondere die Gestaltung des Flügelrades 5 mit seiner zentralen horizontalen Achse 12, den vertikalen plattenförmigen Stützen 4, die die Flügel des Flügelrades 5 in mehrere Sektoren unterteilen, sowie den Verstärkungen 15 der inneren Wände der schwimmenden Träger 1 an den Stellen zu erkennen, wo die Achse 12 diese Wände durchstößt. Figur 4 zeigt, daß das Flügelrad in einer bevorzugten Ausführungsform so gestaltet ist, daß es in der Mitte einen größeren Durchmesser aufweist als an den Enden.

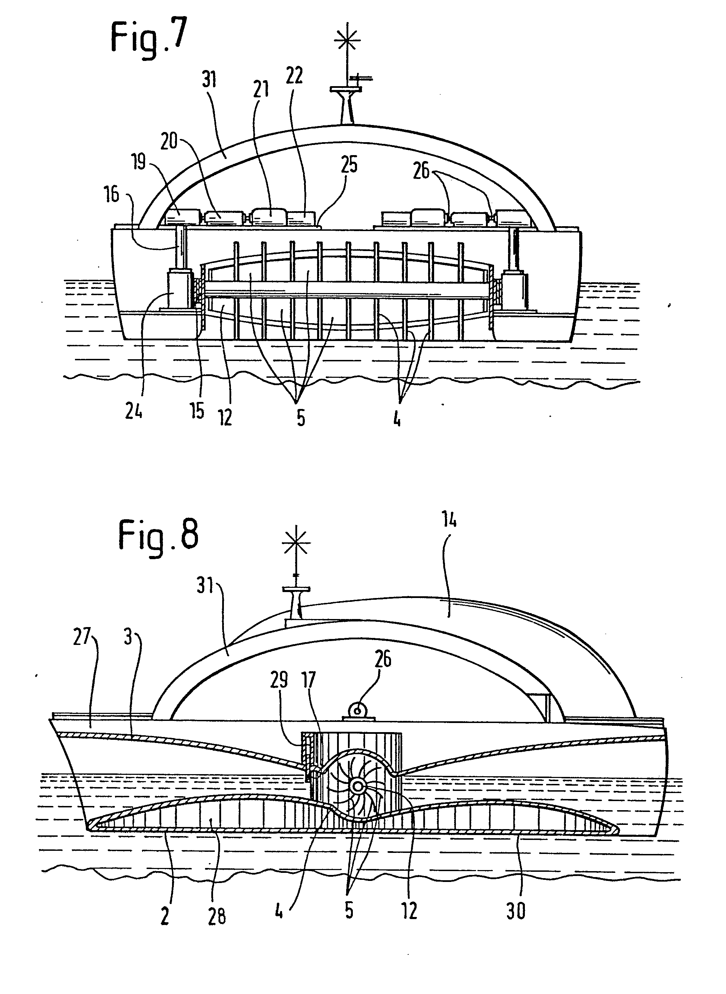

In Figur 4 werden mit 24 die an den beiden Enden der Achse 12 angeordneten Umsetzgetriebe und mit 16 die von ihnen ausgehenden vertikalen Achsen bezeichnet. 17 stellt das Tor dar, mit dem der Zutritt des Wassers zum Flügelrad 5 verschlossen werden kann. Es ist zu erkennen, daß dieses Tor vorzugsweise eine Krümmung in Richtung zur Bugseite des Schwimmkörpers aufweist. Eine genauere Erläuterung der drei letztgenannten Elemente erfolgt im Zusammenhang mit den Figuren 7 und 8.

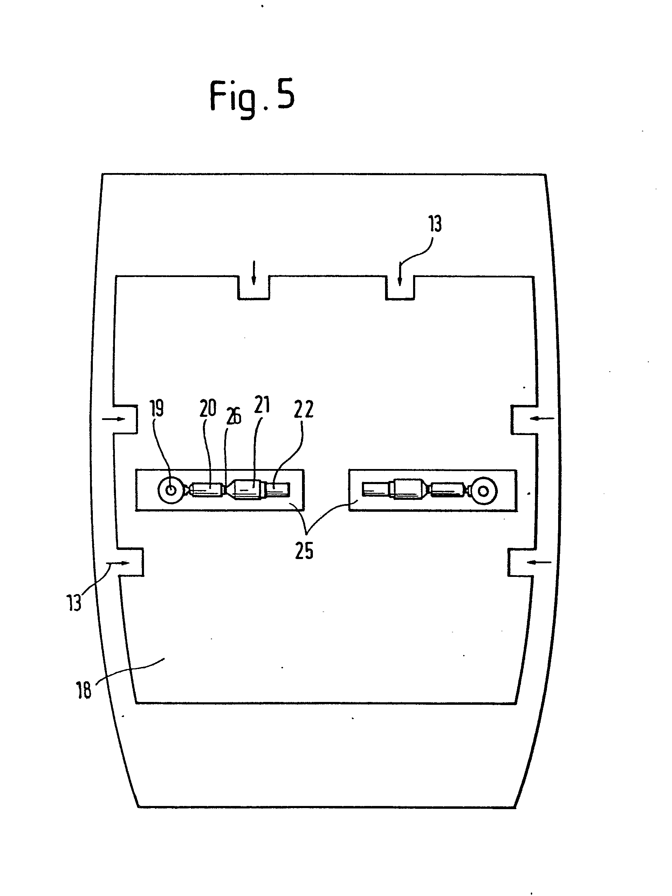

Figur 5 zeigt einen horizontalen Querschnitt durch die Vorrichtung der Erfindung in Höhe der Oberseite des Hauptdecks 3. In dieser Figur bezeichnet 18 das Maschinendeck, das sich innerhalb des kuppelförmigen Aufbaus 8 mit seinen Zugängen 13 befindet. Auf dem Maschinendeck 18 sind Platt-

EPA - PCT-SATZSPIEGEL-PAPIER
... N ARZT GmbH, MÜNCHEN, Tel. (089) 4-80431

formen 25 vorgesehen, die für die Absorption von Schwingungen vom Rest der Vorrichtung isoliert sind. Auf diesen Plattformen 25 befinden sich die Einrichtungen zur Umwandlung der Bewegungsenergie des Flügelrades 5 in elektrische Energie. Diese Einrichtungen bestehen aus Getrieben 19, die die Drehbewegung des Flügelrades 5 aufnehmen, welche über die Umsetzgetriebe 24 und die vertikalen Achsen 16 übertragen wird. Die Getriebe 19 übertragen ihrerseits die Bewegungsenergie über horizontale Achsen 26 zunächst auf Einrichtungen 20 zur automatischen Steuerung der Drehzahl. Von dort gelangt die Bewegungsenergie zu Generatoren 21, in denen die Umwandlung in elektrische Energie erfolgt. Mit 22 sind Wechselstromerzeuger und Verbindungskästen bezeichnet, von denen die gewonnene elektrische Energie über Untermeereskabel auf Transformatorenparks übertragen wird, die sich auf fester Erde befinden.

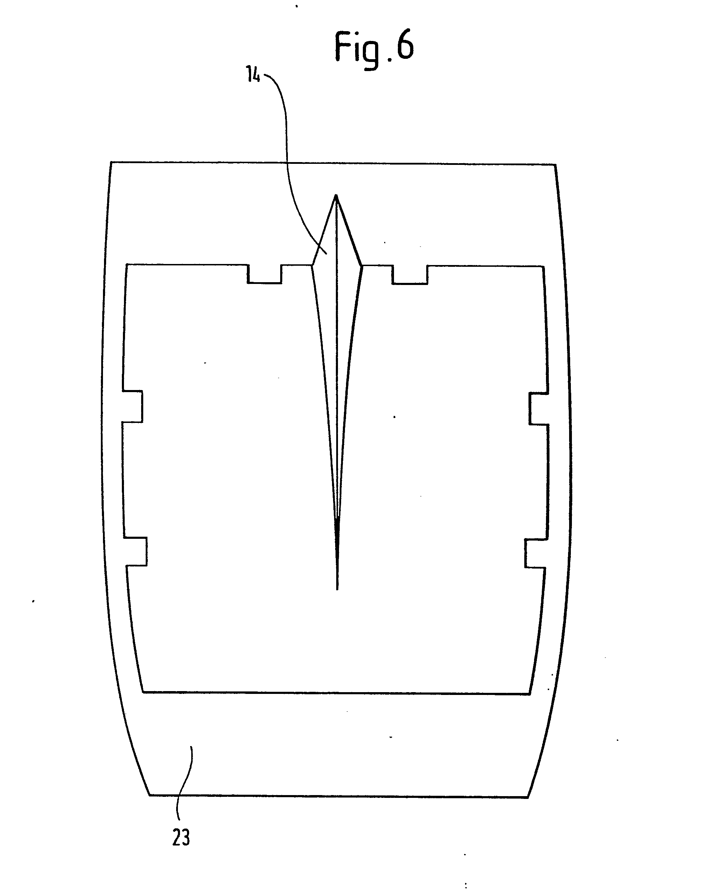

Figur 6 zeigt schematisch eine Aufsicht auf die Vorrichtung der Erfindung, wobei mit 23 die Oberseite des Hauptdecks 3 bezeichnet ist.

Figur 7 zeigt schematisch einen vertikalen Querschnitt durch die Vorrichtung der Erfindung in Höhe des Flügelrades 5. In dieser Figur ist besonders deutlich die Ausführung des Flügelrades 5 mit seiner horizontalen Achse 12 und ihre Verbindung über die Umsetzgetriebe 24 und die vertikalen Achsen 16 mit den auf dem Hauptdeck 3 angeordneten Einrichtungen zur Umwandlung der Bewegungsenergie des Flügelrades 5 in elektrische Energie zu erkennen. Die Achse 12 des Flügelrades 5 ist hohl, um ein zu großes Gewicht der Vorrichtung zu vermeiden. Sie wird von den Verstärkungen 15 an den inneren Seitenwänden der schwimmenden Träger 1 sowie den plattenförmigen Stützen 4 gehalten, in denen jeweils Lager für die Drehbewegung des Flügelrades vorgesehen sind. Die Umsetzgetriebe 24 sind in den schwimmenden Stützen 1 angeordnet. Mit 31 ist in Figur 7 die im Querschnitt dargestellte Stützrippe des kuppelförmigen
Aufbaus 8 bezeichnet.

Figur 8 zeigt schematisch einen Längsschnitt durch die
Vorrichtung der Erfindung in einer Ebene, die zwischen zwei
der Stützplatten 4 liegt. In dieser Figur ist insbesondere
das Profil der Oberseite der unteren Plattform 2 und der
Unterseite des Hauptdecks 3 zu erkennen. Sowohl die untere
Plattform 2, deren Kiel mit 30 bezeichnet wird, als auch
das Hauptdeck 3 sind hohl ausgebildet. Vor dem Flügelrad 5,
dessen Flügel in der ersichtlichen Weise gekrümmt sind,
ist das Tor 17 angeordnet, mit dem der Zutritt des Wassers
zum Flügelrad verschlossen oder geöffnet werden kann. Beim
Öffnen verschwindet das Tor 17 in dem Schlitz 29, der in
dem Hohlraum des Hauptdecks 3 angeordnet ist. Das Öffnen
und Schließen des Tores 17 kann mit mechanischen oder
hydraulischen Mitteln bewerkstelligt werden.

Das Beispiel erläutert die Erfindung.

                    B e i s p i e l

Eine Vorrichtung für den praktischen Gebrauch bei Erzeugung von
elektrischer Energie durch Ausnutzung der Bewegungsenergie
des Meereswassers hat die in den Figuren dargestellte
Form. Die Länge der schwimmenden Träger beträgt etwa 225 m,
ihre größte Breite etwa 30 m und ihre Höhe etwa 40 m. Die
Öffnung für den Eintritt des Wassers an der Bugseite hat
eine Breite von etwa 135 und eine Höhe von etwa 28 m. An
der Stelle, an der das Tor vorgesehen ist, beträgt die
Höhe der Öffnung noch etwa 10 m und ihre Breite etwa 105 m.
Das Flügelrad hat eine Breite von etwa 100 m und einen
größten Durchmesser von etwa 22 m in der Mitte, während
sein Durchmesser an den Seiten etwa 13 m beträgt. Das
Flügelrad wird durch neun plattenförmige Stützen in zehn
Sektoren unterteilt. Die plattenförmigen Stützen sind in
einem Abstand von etwa 10 m voneinander angeordnet.

ERHAR..CT-SATZSPIEGEL-PAPIER
...

Durch die Konzentration des Wassers infolge der abnehmenden
Breite der Öffnung und insbesondere infolge der Gestaltung
des Profils der Oberseite der unteren Plattform wird eine
Erhöhung der Strömungsgeschwindigkeit des Wassers um mindestens den Faktor 2 erreicht.

Patentansprüche

1. Vorrichtung zur Erzeugung von elektrischer Energie
durch Ausnutzung der Bewegungsenergie des Meereswassers, g e k e n n z e i c h n e t durch einen
Schwimmkörper, der zwei
schwimmende Träger (1) aufweist, die durch eine untere
Plattform (2), ein Hauptdeck (3) und ein zwischen diesen angeordnetes Flügelrad (5) mit horizontaler Achse
(12) verbunden sind, welche die Bewegung des Flügelrades
(5) auf eine Einrichtung zur Umwandlung der Bewegungsenergie in elektrische Energie überträgt.

2. Vorrichtung nach Anspruch 1, dadurch gekennzeichnet,
daß die Einrichtung zur Umwandlung der Bewegungsenergie
in elektrische Energie aus Getrieben (19), Einrichtungen (20) zur automatischen Steuerung der Drehzahl und
Generatoren (21) zur Erzeugung der elektrischen Energie
besteht, von denen je ein Satz jedem der seitlichen Enden der Achse (12) zugeordnet ist.

3. Vorrichtung nach Anspruch 2, dadurch gekennzeichnet,
daß die Bewegungsenergie des Flügelrades (5) durch
seine Achse (12) über an den seitlichen Enden der Achse
(12) angeordnete Umsetzgetriebe (24) und davon ausgehende senkrechte Achsen (16) auf die auf dem Hauptdeck
(3) befindliche Einrichtung zur Umwandlung der Bewegungsenergie in elektrische Energie übertragen wird.

4. Vorrichtung nach Anspruch 1 bis 3, dadurch gekennzeichnet, daß die Oberseite der unteren Plattform (2) ein
Profil aufweist, welches zwischen dem Bug des Schwimmkörpers und dem Flügelrad (5), sowie zwischen dem Flügelrad (5) und dem Heck des Schwimmkörpers in Längsrichtung nach oben gewölbt ist, während es am Ort des Flügelrades (5) eine Art Wanne bildet, und daß die Unterseite des Hauptdecks (3) sowohl von der Bug- als auch von der Heckseite des Schwimmkörpers her in Richtung auf den Ort des Flügelrades (5) abfällt, um dort eine nach oben gerichtete Wölbung zu bilden, wobei sich das Flügelrad (5) zwischen der wannenförmigen Absenkung der Oberseite der unteren Plattform (2) und der nach oben gerichteten Wölbung der Unterseite des Hauptdecks (3) befindet.

5. Vorrichtung nach Anspruch 1 bis 4, dadurch gekennzeichnet, daß das von der Bugseite in die Vorrichtung einströmende Wasser einen Weg mit sich verengendem Querschnitt vorfindet, der durch die inneren Seitenwände der sich verbreiternden schwimmenden Träger (1), die ansteigende Oberseite der unteren Plattform (2) und die abfallende Unterseite des Hauptdecks (3) gebildet wird.

6. Vorrichtung nach Anspruch 1 bis 5, dadurch gekennzeichnet, daß die Öffnung zwischen den inneren Seitenwänden der schwimmenden Träger (1), der Oberseite der unteren Plattform (2) und der Unterseite des Hauptdecks (3) etwa an ihrer engsten Stelle vor dem Flügelrad (5) durch ein Tor (17) verschließbar ist.

7. Vorrichtung nach Anspruch 6, dadurch gekennzeichnet, daß das Tor (17) beim Öffnen in einem Schlitz (29) verschwindet, der sich in dem Hohlraum (27) des Hauptdecks (3) befindet.

8. Vorrichtung nach Anspruch 1 bis 7, dadurch gekennzeichnet, daß die inneren Seitenwände der schwimmenden Träger (1) im Bereich des Flügelrades (5) und des Tores (17) verstärkt sind.

9. Vorrichtung nach Anspruch 1 bis 8, dadurch gekennzeichnet, daß sich im Bereich des Flügelrades zwischen der unteren Plattform (2) und dem Hauptdeck (3) in Längsrichtung zum Schwimmkörper angeordnete plattenförmige Stützen (4) befinden, die die Flügel des Flügelrades (5) in Breitenrichtung in mehrere Abschnitte unterteilen, während sie von seiner Achse (12) durchstoßen werden.

10. Vorrichtung nach Anspruch 9, dadurch gekennzeichnet, daß die Flügel des Flügelrades (5) in jedem der durch die plattenförmigen Stützen (4) geschaffenen Sektoren im Verhältnis zu den Nachbarsektoren versetzt an der Achse (12) angeordnet sind.

11. Vorrichtung nach Anspruch 1 bis 10, dadurch gekennzeichnet, daß die Achse (12) hohl ist.

12. Vorrichtung nach Anspruch 1 bis 11, dadurch gekennzeichnet, daß auf dem Hauptdeck ein kuppelförmiger Aufbau (8) vorgesehen ist, in dem sich die Maschinenebene (18) der Einrichtung zur Umwandlung der Bewegungsenergie in elektrische Energie befindet.

13. Vorrichtung nach Anspruch 1 bis 12, dadurch gekennzeichnet, daß auf dem Hauptdeck eine Einrichtung (14) vorgesehen ist, mit deren Hilfe der Schwimmkörper in Windrichtung gedreht werden kann.

14. Vorrichtung nach Anspruch 2 bis 13, dadurch gekennzeichnet, daß den Generatoren (21) Wechselstromerzeuger (22) nachgeschaltet sind.

Fig.1

Fig.2

Fig. 3

# Fig. 4

# Fig. 5

# Fig.6

Fig.7

Fig.8

**Europäisches Patentamt**

## EUROPÄISCHER RECHERCHENBERICHT

| EINSCHLÄGIGE DOKUMENTE | | | KLASSIFIKATION DER ANMELDUNG (Int. Cl ³) |
|---|---|---|---|
| Kategorie | Kennzeichnung des Dokuments mit Angabe, soweit erforderlich, der maßgeblichen Teile | betrifft Anspruch | |
| | DE - C - 814 879 (BERNER)  * Seite 2, Zeilen 27-76 *  -- | 1,2, 12,13 | F 03 B 17/06 7/00 |
| | FR - A - 2 434 282 (LANDRIAULT)  * Seite 1, Zeile 38 - Seite 4, Zeile 14 *  -- | 1,2,4, 5,11, 13,14 | |
| | GB - A - 143 435 (ROBLEY)  * Seite 1, Zeile 28 - Seite 2, Zeile 10 *  -- | 1-3 | **RECHERCHIERTE SACHGEBIETE (Int. Cl.³)** |
| | US - A - 1 797 089 (HUFFSTUTTER)  * Seite 1, Zeile 33 - Seite 2, Zeile 12 *  -- | 1,5-8 | F 03 B |
| | US - A - 1 671 005 (BARNES)  * Seite 1, Zeilen 46-102; Abbildung 4 *  -- | 1,9,10 | |
| | DE - C - 372 182 (KLADEK)  * Seite 1, Zeilen 11-19 *  ---- | 3 | **KATEGORIE DER GENANNTEN DOKUMENTE**  X: von besonderer Bedeutung  A: technologischer Hintergrund  O: nichtschriftliche Offenbarung  P: Zwischenliteratur  T: der Erfindung zugrunde liegende Theorien oder Grundsätze  E: kollidierende Anmeldung  D: in der Anmeldung angeführtes Dokument  L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 10-11-1981 | DE WINTER |

EPA form 1503.1   06.78